Europäisches Patentamt

European Patent Office

Office européen des brevets

(19)

(11) Numéro de publication: **0 302 776**
**A1**

## (12) DEMANDE DE BREVET EUROPEEN

(21) Numéro de dépôt: **88401973.8**

(22) Date de dépôt: **29.07.88**

(51) Int. Cl.⁴: **B 62 D 55/04**
**B 62 D 55/30, B 62 D 49/06,**
**B 62 D 55/125, B 62 D 55/112**

(30) Priorité: **07.08.87 FR 8711318**

(43) Date de publication de la demande:
**08.02.89 Bulletin 89/06**

(84) Etats contractants désignés:
**AT BE CH DE ES FR GB GR IT LI LU NL SE**

(71) Demandeur: **COLMANT CUVELIER SOCIETE DITE :**
**rue Greuze**
**F-59000 Lille (FR)**

(72) Inventeur: **Virly, Patrick**
**route de Bouess Velles**
**F-36330 Le Poinçonnet (FR)**

(74) Mandataire: **Hud, Robert**
**Cabinet COLLIGNON 6, rue de Madrid**
**F-75008 Paris (FR)**

(54) **Dispositif tendeur pour l'élément souple ou articulé d'un système de transmission ou de roulement.**

(57)  Le support 1 du moyeu de la roue assurant la tension de la chenille souple est relié au châssis du véhicule par des biellettes 3 comportant à chaque extrémité une articulation 4 qui permet le pivotement dans toutes les directions. Le support 1 est articulé par un axe vertical 3 à une extrémité d'un bras longitudinal 5 dont on peut faire varier la longueur. On peut ainsi, par variation de la longueur du bras 5, régler la tension de la chenille tout en assurant par les biellettes 3 la suspension du support 1.

L'invention s'applique à la tension des chenilles équipant des engins divers.

Fig. 4

EP 0 302 776 A1

**Description**

### Dispositif tendeur pour l'élément souple ou articulé d'un système de transmission ou de roulement.

L'invention concerne l'utilisation sur un engin d'une bande non extensible souple ou articulée d'un système de transmission ou de roulement et, plus particulièrement, elle concerne un dispositif permettant d'assurer la tension permanente d'une telle bande souple ou articulée, en particulier d'une chenille.

On connaît des dispositifs tendeurs pour courroies souples, qui comprennent un galet conçu pour engager la courroie et qui est mobile dans le plan de celle-ci. De tels dispositifs tendeurs ne sont toutefois pas applicables pour réaliser la tension de chenilles souples ou articulées dans le sens longitudinal équipant des engins divers et, en particulier, les chenilles souples en matière élastomère équipant les roues à pneumatiques d'un tracteur agricole.

En effet, dans cette application, le galet du dispositif tendeur serait constitué par une roue dont l'essieu serait alors porté rigidement par le châssis de l'engin ce qui, lorsque la voie de déplacement de l'engin ne serait pas parfaitement plane, empêcherait le mouvement normal de celui-ci et entraînerait sa détérioration.

On connait aussi, par exemple par le brevet américain N° 2 719 062, des dispositifs à semi-chenille pour tracteur dans lesquels l'ensemble de la structure supportant les roues de tension de la chenille est fixé, de façon flottante, au niveau de l'essieu de la roue motrice du tracteur. Ces dispositifs présentent divers inconvénients tels que :

1) un manque de rigidité dans le plan horizontal, ayant pour conséquence un mauvais guidage de la bande et des risques importants de déchenillage, particulièrement lors des virages ;

2) une impossibilité de régler correctement et de façon définitive, quelles que soient les conditions d'emploi, la géométrie des roues de tension qui tient compte de trois paramètres :

- l'alignement, c'est-à-dire la coïncidence de l'axe longitudinal de la roue motrice avec celui des roues de tension,
- le carrossage, par inclinaison des roues de tension par rapport au plan vertical longitudinal,
- le pincement, par pivotement des roues de tension autour d'un axe vertical pour rapprochement vers l'intérieur de leur partie avant.

Ces trois paramètres sont essentiels pour articuler un bon guidage de la bande en toutes circonstances, en particulier lorsqu'il s'agit d'une bande entraînée par friction.

3) la transmission d'un effort important, amplifié par le bras de levier représenté par la longueur de la structure flottante, au niveau du carter de l'essieu de la roue motrice, mettant en danger la résistance de celui-ci et fragilisant les ensembles mécaniques avoisinants.

L'utilisation d'un dispositif tendeur est nécessaire par exemple sur des engins semi-chenillés tels que des tracteurs agricoles où, la chenille souple en matière élastomère étant montée sur des roues à pneumatiques, une bonne transmission par friction de la force motrice à la chenille ainsi qu'une bonne portance de la chenille sont conditionnées en permanence par une tension correcte de celle-ci.

La présente invention a pour objet de remédier aux inconvénients mentionnés ci-dessus des dispositifs tendeurs connus et elle propose à cet effet un dispositif tendeur d'une grande solidité dont la roue de tension, tout en assurant une tension permanente de l'élément souple ou articulé sur lequel elle agit, est conçue pour s'adapter aux inégalités présentées par la voie de déplacement de l'engin en permettant une progression aisée de celui-ci quel que soit l'état de surface de la voie.

Selon l'invention, le moyeu de la roue de tension du dispositif tendeur est porté par un support qui est fixé au châssis de l'engin, au droit de l'axe de ce moyeu, par un système de suspension permettant le déplacement de ce support dans un plan vertical, ledit support étant également fixé au châssis par un système de longueur variable qui permet le déplacement de la roue de tension dans un plan horizontal pour assurer en permanence la tension de l'élément souple ou articulé.

Le système de suspension peut avantageusement être constitué par des bielles, pouvant être de longueur réglable, qui sont articulées à une extrémité au châssis de l'engin pour pouvoir pivoter dans toutes les directions et dont l'autre extrémité est reliée au support de moyeu par une articulation assurant également les mouvements dans toutes les directions, ce qui permet le réglage du parallélisme et de la voie du moyeu par rapport au châssis de l'engin, ainsi que de l'alignement, du carrossage et du pincement, alors que des moyens de contrainte (pouvant être constitués par un ressort, un vérin, une barre de torsion ou un autre système connu similaire) sont disposés entre le châssis et le support de moyeu. Pour simplification, dans certaines applications, ces moyens de contrainte pourront même être supprimés.

Le système de tension, de longueur variable, peut comprendre un bras qui est relié rigidement ou non à une extrémité au support de moyeu et qui est relié à son autre extrémité au châssis de l'engin par une articulation d'axe horizontal. Selon une réalisation préférée, le bras est articulé au support de moyeu par un axe vertical. Des moyens de contrainte (pouvant être constitués par un ressort, un vérin, une barre de torsion ou un moyen connu similaire) sont disposés entre le châssis de l'engin et le support de moyeu, dans la direction du bras, pour appliquer de façon réglable, par un déplacement horizontal du support de moyeu, la roue de tension contre la bande souple ou articulée. La variation de la longueur du système de tension peut être obtenue par tout moyen connu convenable. Par exemple le bras articulé au support de moyeu peut être réalisé sous forme télescopique, ou il peut avoir son extrémité suspendue au châssis de l'engin par une bielle articulée pour constituer un triangle déformable.

On comprend que le dispositif tendeur est applicable non seulement à la mise-en-oeuvre d'une chenille souple sur un tracteur agricole, mais aussi sur des engins semi-chenillés ou chenillés. On comprend aussi que la roue de tension, dont le moyeu est porté par le dispositif selon l'invention, peut être simple ou double et peut être constituée par une roue à pneumatique, par un galet en caoutchouc ou non ou par un barbotin d'entraînement. De par la conception de la roue de tension, on peut commander son relevage pour permettre le passage d'obstacles, ou bien tout réglage nécessité par le mode d'utilisation, ou bien le démontage.

On notera également que, conformément à l'invention, au support du moyeu de la roue de tension pourrait être associé un système moteur par l'intermédiaire d'un organe de transmission approprié, tel qu'un cardan par exemple.

On comprendra encore que le dispositif tendeur selon l'invention peut, en fonction de l'application désirée, prendre toute position appropriée dans le train chenillé.

On notera que, par utilisation d'un vérin hydraulique comme moyen de contrainte du système de suspension de chaque côté du tracteur, on peut réaliser un système d'auto-régulation de la suspension par la liaison entre elles des chambres correspondantes des deux vérins. Par l'utilisation de capteurs ou de tous autres moyens appropriés prenant en compte l'équilibre de l'engin, de l'attelage ou de toute autre charge additionnelle, on pourra aussi assurer une régulation de la suspension.

Enfin, sans sortir du cadre de l'invention, le dispositif tendeur pourrait de façon plus générale être appliqué dans une chaîne cinématique comportant une transmission par chaîne, par bande ou par courroie.

Pour bien faire comprendre le dispositif selon l'invention on en décrira ci-après, à titre d'exemple sans caractère limitatif, une forme d'exécution préférée en référence au dessin schématique annexé dans lequel :

la figure 1 est une vue de profil d'un tracteur agricole équipé à l'arrière d'une chenille souple ;

la figure 2 est une vue perspective du dispositif support pour le moyeu de la roue destinée à assurer la tension de la chenille souple de la figure 1 ;

la figure 3 est une vue en plan du dispositif de la figure 2 ;

la figure 4 est une vue partielle en perspective du dispositif des figures 2 et 3 ;

les figures 5 à 7 sont des schémas montrant le réglage, pour la roue de tension, de l'alignement, du carrossage et du pincement respectivement, les figures 5 et 7 étant des vues en plan alors que la figure 6 est une vue en élévation ; et

la figure 8 est un schéma des circuits hydraulique de contrainte associés aux moyens de tension et de suspension.

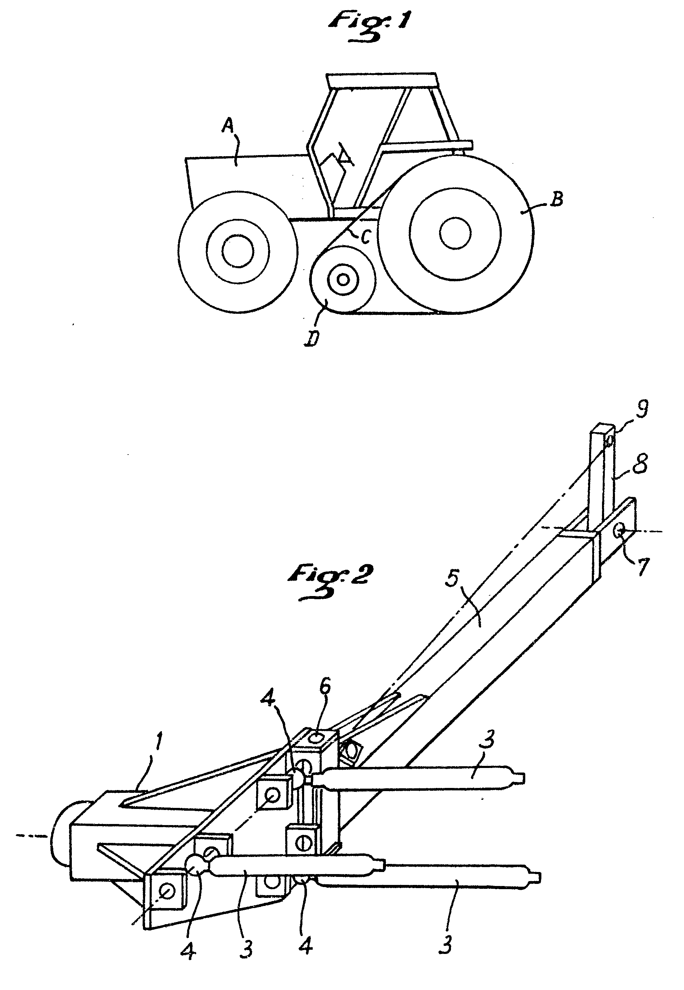

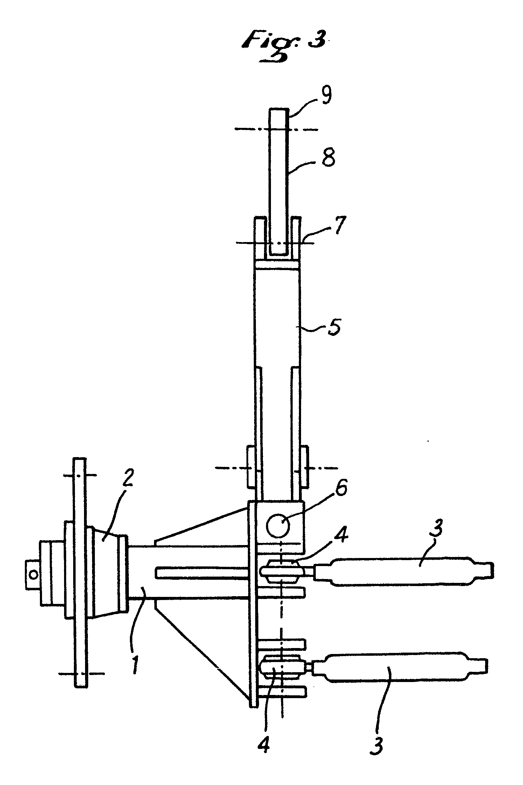

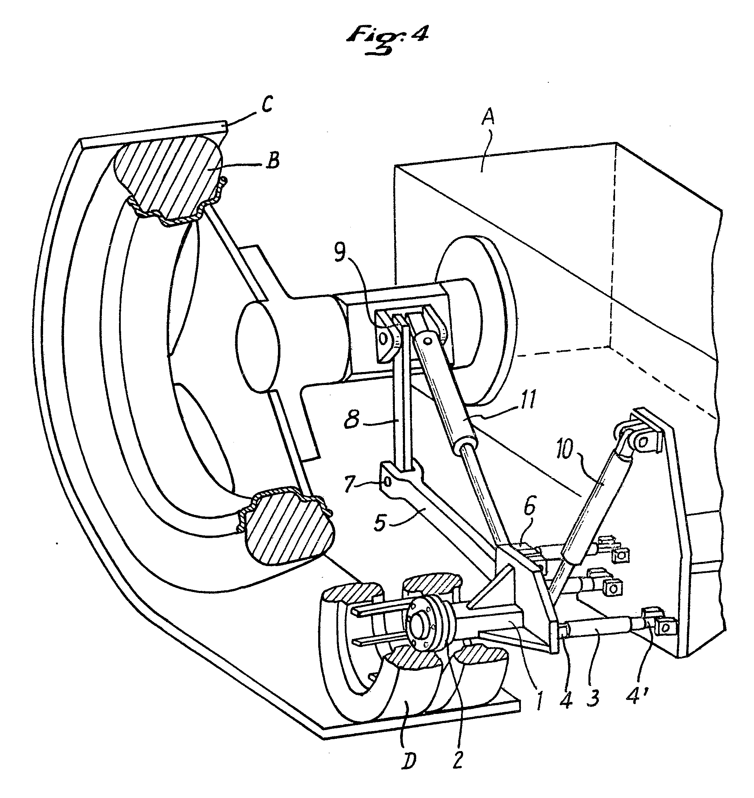

A la figure 1, on a représenté en A un tracteur agricole dont la roue arrière B à pneumatique est équipée d'une chenille souple C en matière élastomère dont la tension est assurée par une roue à pneumatique D de plus faible diamètre. En référence aux figures 2 à 4, on a représenté en 1 un support pour le moyeu 2 de la roue D, laquelle se présente sous la forme d'une roue jumelée. Le support 1 est supporté et guidé par trois bielles 3, de longueur réglable, ayant chacune une extrémité qui coopère avec le support 1 par l'intermédiaire d'une articulation à rotule 4, alors que leur extrémité opposée est articulée au châssis de l'engin A, au droit de l'axe du moyeu 2, également par des articulations à rotule 4'. Un système de contrainte, constitué dans l'exemple représenté par un vérin hydraulique 10 à double effet est disposé entre le châssis et le support 1 du moyeu 2 pour réaliser la suspension qui est obtenue par le déplacement vertical du support 1.

L'équilibre du moyeu 2 autour de son axe est maintenu par un bras 5 qui est articulé, à une extrémité, au support 1 du moyeu 2 au moyen d'un axe vertical 6. L'extrémité opposée du bras 5 est articulée, autour d'un axe horizontal 7, à une extrémité d'une bielle 8 dont l'autre extrémité 9 est articulée par un axe horizontal au châssis de l'engin A. La tension de la chenille s'obtient par le déplacement horizontal du support 1 du moyeu 2, qui s'effectue par actionnement d'un vérin hydraulique 11 à double effet disposé pour former le troisième côté du triangle déformable constitué par le bras 5 et la bielle 8.

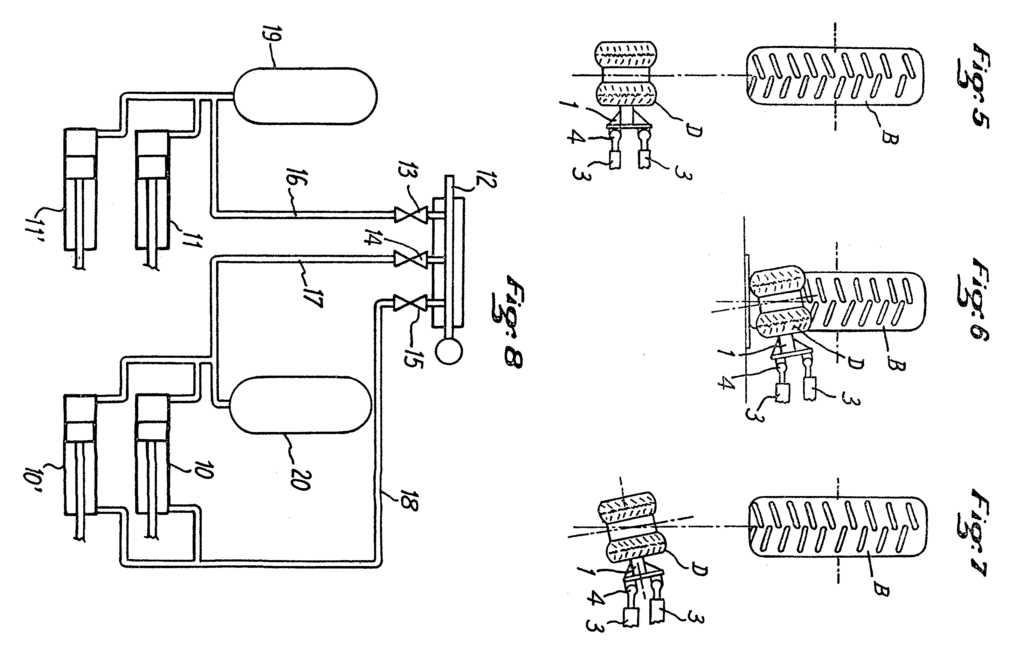

La disposition des bielles 3 et du vérin hydraulique 10 permet le réglage du parallélisme et de la voie du moyeu 2 de la roue de tension D. Cette disposition permet aussi le réglage de l'alignement de l'axe longitudinal de la roue motrice B du tracteur avec celui de la roue de tension 2 (voir figure 5), le réglage du carrossage par inclinaison de la roue de tension 2 par rapport au plan vertical longitudinal (voir figure 6), et le réglage du pincement par rapprochement de l'avant des roues de tension par rapport au châssis de l'engin (voir figure 7).

On comprendra qu'on a décrit et représenté le dispositif de roue de tension D pour un côté du tracteur, mais que celui-ci est équipé de l'autre côté, symétriquement par rapport au plan vertical passant par l'axe longitudinal du tracteur, par un dispositif identique.

A la figure 8 on a représenté le circuit hydraulique d'actionnement des systèmes de tension et de suspension des deux côtés du tracteur. Une arrivée d'huile 12 est reliée, par l'intermédiaire de vannes 13,14,15 respectivement, à des conduits d'alimentation 16,17,18. Le conduit 16 est relié aux chambres, côté piston, des deux vérins hydrauliques 11,11' commandant la tension de la courroie de chaque côté du tracteur. Le conduit 16 est également relié à un accumulateur oléopneumatiqu 19, en constituant un circuit hydraulique fermé qui assure la tension à pression constante de la courroie de chaque côté du tracteur.

Le conduit 18 est relié à la chambre, côté tige, de chacun des deux vérins hydrauliques 10,10' commandant la suspension de chaque côté du tracteur, alors que le conduit 17 est relié à la chambre côté piston de chacun de ces deux vérins ainsi qu'à un accumulateur oléopneumatique 20. Le circuit fermé constitué par les conduits 17,18 assure la suspension et le relevage éventuel à pression constante, ainsi que le maintien des roues de tension à une altitude définie.

On comprendra que les systèmes de tension et de suspension selon l'invention, et plus généralement le dispositif de portance, pourront être régulés à tout instant, séparément tant à gauche qu'à droite, à l'avant ou à l'arrière, par l'utilisation de capteurs ou de tout autre moyen approprié tenant compte de l'équilibre de l'engin, de l'attelage ou de toute autre charge additionnelle portée ou tirée, ainsi que de l'état ou de la nature du terrain.

Cette régulation pourra être obtenue tant par un système indépendant qu'en utilisant les moyens propres de l'engin (centrale hydraulique embarquée ou ordinateur de bord par exemple), ceux-ci pouvant être eux-mêmes télécommandés.

On comprendra que la description ci-dessus a été donnée à simple titre d'exemple, sans caractère limitatif, et que des adjonctions ou des modifications constructives pourraient y être apportées sans sortir du cadre de l'invention définie par les revendications qui suivent. On comprendra en particulier que le dispositif a été décrit en rapport avec un tracteur agricole mais que, sans sortir de l'invention, il pourrait s'appliquer à tout autre engin, chenillé ou semi-chenillé, utilisant cette technologie.

**Revendications**

1. Dispositif tendeur pour l'élément souple ou articulé d'un système de transmission ou de roulement équipant un engin, qui comprend au moins une roue de tension (D) conçue pour engager ledit élément souple ou articulé (C) et qui est portée par un support (1) relié au châssis de l'engin (A) au niveau de l'essieu de roue arrière de celui-ci par un sytème (5,8) de longueur variable permettant le déplacement de la roue de tension (D) dans la direction de l'axe de l'engin (A), des moyens élastiques de contrainte (10) étant prévus entre le châssis de l'engin (A) et le support (1) de la roue de tension (D) permettant le déplacement dudit support (1) dans un plan vertical, caractérisé en ce que le support (1) de la roue de tension (D) est fixé de plus au châssis de l'engin (1), au droit du moyeu de la roue de tension (D), par un système de suspension articulé (3,4) auquel sont associés lesdits moyens élastiques de contrainte (10).

2. Dispositif selon la revendication 1, caractérisé en ce que ledit système de suspension articulée est constitué par des bielles (3) articulées à une extrémité au châssis de l'engin (A) pour pouvoir pivoter dans toutes les directions et dont l'autre extrémité est reliée au support (1) par une articulation (4) permettant de pivoter dans toutes les directions.

3. Dispositif tendeur selon la revendication 2, caractérisé en ce que les bielles (3) sont de longueur réglable.

4. Dispositif tendeur selon l'une quelconque des revendications précédentes, caractérisé en ce que le système de tension de longueur variable comprend un bras (5) relié à une extrémité au support (1) du moyeu (2) par un axe vertical (6) et relié à son autre extrémité au châssis de l'engin par une articulation d'axe horizontal, un organe de contrainte (11) reliant ledit châssis au support (1) du moyeu (2) pour appliquer la roue de tension contre l'élément souple.

5. Dispositif selon la revendication 4, caractérisé en ce que ledit bras (5) est constitué sous forme télescopique.

6. Dispositif selon la revendication 4, caractérisé en ce que ledit bras (5) est relié au châssis de l'engin par l'intermédiaire d'une bielle articulée (8) pour constituer un triangle déformable.

7. Dispositif tendeur selon l'une quelconque des revendications 2 à 6, caractérisé en ce que lesdits organes de contrainte (10,11) du système de suspension et/ou du système de tension sont constitués par des composants hydrauliques et/ou électriques et/ou électroniques.

8. Dispositif tendeur selon l'une quelconque des revendications 2 à 6, caractérisé en ce que lesdits organes de contrainte du système de suspension et/ou du système de tension sont constitués par des composants mécaniques tels que des ressorts ou des barres de torsion et/ou des composants électriques et/ou électroniques permettant une régulation.

9. Dispositif tendeur selon l'une quelconque des revendications précédentes, caractérisé en ce que ladite roue de tension est une roue à revêtement élastomère, pleine ou gonflable alors que ledit élément souple ou articulé est constitué par une bande en matière élastomère, synthétique ou métallique.

10. Dispositif tendeur selon l'une quelconque des revendications 1 à 8, caractérisé en ce que ladite roue de tension est constituée par un barbotin d'entraînement et en ce que ledit élément souple ou articulé est constitué par une bande en matière élastomère, synthétique, ou métallique.

11. Dispositif tendeur selon l'une quelconque des revendications précédentes, caractérisé en ce que, au support (1) du moyeu (2) de la roue de tension (D) est associé un système moteur par l'intermédiaire d'un organe de transmission approprié.

12. Dispositif tendeur selon la revendication 4, caractérisé en ce que la liaison entre le bras (5) et le support (1) du moyeu est constituée par une articulation d'axe vertical (6).

13. Dipositif selon la revendication 7, caractérisé en ce que l'organe de contrainte du système de suspension et constitué par un vérin hydraulique (10) à double effet et celui du système de tension par un vérin hydraulique (11) à simple effet, chacun de ces deux vérins (10,11) étant alimenté à partir d'un circuit hydraulique à pression constante comportant un accumulateur oléo-pneumatique (19,20).

14. Dispositif selon la revendication 13, caractérisé en ce que l'engin comporte de chaque côté un dispositif de tension et de suspension, les vérins hydrauliques (10,10') assurant la suspension des deux côtés de l'engin étant reliés ensemble, et les vérins hydrauliques (11,11') assurant la tension des deux côtés de l'engin étant reliés ensemble.

15. Dispositif selon la revendication 7, caractérisé par le fait que les systèmes de tension et de suspension sont régulés à tout instant, séparément tant à gauche qu'à droite, à l'avant ou à l'arrière par l'utilisation de capteurs ou de moyens similaires appropriés tenant compte de l'équilibre de l'engin, de l'attelage ou de toute autre charge additionnelle portée ou tirée, ainsi que de l'état et de la nature du terrain.

0302776

**Fig. 1**

**Fig. 2**

Fig. 3

*Fig. 4*

0302776

**Fig. 5** **Fig. 6** **Fig. 7**

**Fig. 8**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-1 035 475  (DELCOURT)<br>* En entier, voir en particulier figures 1,2 (éléments 2,3) *<br>--- | 1,8 | B 62 D  55/04<br>B 62 D  55/30<br>B 62 D  49/06<br>B 62 D  55/112<br>B 62 D  55/125 |
| X | FR-A-1 216 756  (GERGEN)<br>* Page 1, colonne de droite, paragraphe 2; figures 1(éléments 4,5),3 (élément 7) *<br>--- | 1,4-7,<br>10,11 | |
| A | BE-A-  672 231  (BOFORS)<br>* Figures 1,2; page 3 *<br>--- | 1,13,14 | |
| A | US-A-3 452 842  (BEXTEN)<br>* En entier *<br>--- | 1,13 | |
| A | US-A-3 752 499  (BRANDSTADTER)<br>* Revendications; figure 2 *<br>--- | 1,13,14 | |
| A | FR-E-  91 932  (MESSIER)<br>* En entier *<br>--- | 1,13 | |
| A | FR-A-1 514 404  (MESSIER)<br>* En entier *<br>--- | 1,13 | DOMAINES TECHNIQUES RECHERCHES (Int. Cl.4) |
| A,D | US-A-2 719 062  (ARPS)<br>* Figures 2,3,5 *<br>--- | 1 | B 62 D |
| A | BE-A-  661 220  (F.N.)<br>* Revendications 1,2,6,7,10; figures 42,44 *<br>----- | 1 | |

Le présent rapport a été établi pour toutes les revendications

| Lieu de la recherche | Date d'achèvement de la recherche | Examinateur |
|---|---|---|
| LA HAYE | 12-09-1988 | SCHMAL R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................................
& : membre de la même famille, document correspondant

EPO FORM 1503 03.82 (P0402)